# Europäisches Patentamt

## European Patent Office

## Office européen des brevets

(19)

(11) Veröffentlichungsnummer: **0 107 074**
**B1**

(12) # EUROPÄISCHE PATENTSCHRIFT

(45) Veröffentlichungstag der Patentschrift:
**07.01.87**

(51) Int. Cl.⁴: **H 04 Q 1/448**

(21) Anmeldenummer: **83109573.2**

(22) Anmeldetag: **26.09.83**

(54) Verfahren zur Unterdrückung von einem sinusförmigen Hörton bei der Übertragung in einem digitalen Fernmeldevermittlungssystem überlagerten Quantisierungsgeräuschen.

(30) Priorität: **28.09.82 DE 3235881**

(43) Veröffentlichungstag der Anmeldung:
**02.05.84 Patentblatt 84/18**

(45) Bekanntmachung des Hinweises auf die Patenterteilung:
**07.01.87 Patentblatt 87/2**

(84) Benannte Vertragsstaaten:
**CH FR GB LI SE**

(56) Entgegenhaltungen:
**ELECTRONICS AND COMMUNICATIONS IN JAPAN, Band 62, Nr. 1, Januar 1979, Seiten 76-83, Silver Spring, Maryland, US, I. KANEMITSU u.a.: "A study on digitalized audio-frequency signals for PCM switching systems"**

(73) Patentinhaber: **Siemens Aktiengesellschaft Berlin und München, Wittelsbacherplatz 2, D-8000 München 2 (DE)**

(72) Erfinder: **Nagler, Werner, Dipl.-Ing., Lipowskystrasse 8, D-8000 München 70 (DE)**
Erfinder: **Rudolf, Hans-Werner, Dr. rer.nat., Wörthstrasse 17, D-8000 München 80 (DE)**
Erfinder: **Stadler, Monika, Althausham 7, D-8164 Hausham (DE)**

# Beschreibung

Die Erfindung betrifft ein Verfahren zur Unterdrükkung von einem Hörton mit sinusförmigem Verlauf bei dessen Übertragung in einem digitalen Fernmelde-Vermittlungssystem überlagerten Quantisierungsgeräuschen.

Bei der Übertragung von Sprachsignalen in digitalen Vermittlungssystemen, denen eine Abtastfrequenz von beispielsweise 8 kHz zugrundegelegt ist, werden codierte Abtastproben in Zeitabständen von 125 μsec übertragen. Da die genannte Abtastfrequenz für die Frequenz der üblicherweise verwendeten Hörtöne kein ganzzahliges Vielfaches ist, entstehen Quantisierungsgeräusche, die insbesondere auf die mit relativ hohen Amplituden auftretenden gemeinsamen Subharmonischen der Hörtöne kein ganzzahliges Vielfaches ist, entstehen Quantisierungsgeräusche, die insbesondere auf die mit relativ hohen Amplituden auftretenden gemeinsamen Subharmonischen der Hörfrequenz und der Abtastfrequenz zurückzuführen sind. Diese gemeinsamen Subharmonischen sowie deren Oberwellen sind im engen Abstand über das ganze Sprachband verteilt und können daher nicht durch Filter unwirksam gemacht werden. Gerade bei Signalen mit sinusförmigem Verlauf, wie sie die Hörtöne darstellen, machen sich solche Quantisierungsgeräusche auch dann noch besonders störend bemerkbar, wenn bei der Analog-Digital-Wandlung vor einer Übertragung eine Signalkompression und bei der Digital-Analog-Wandlung nach der Übertragung eine Dekompression jeweils unter Zugrundelegung einer dem A-Gesetz oder dem μ-Gesetz folgenden Wandlerkennlinie vorgenommen wird (siehe z.B. Electronics and Communications in Japan, Vol. 61-B, Nr. 12, 1978, Seiten 76 bis 82).

Eine Vermeidung solcher Störungen dadurch, dass lediglich solche Hörtöne erzeugt werden, deren Frequenz eine Subharmonische der Abtastfrequenz ist, lässt sich im Hinblick auf die zu erfüllenden Signalisierungsaufgaben schlecht erreichen, wozu noch kommt, dass die Erzeugung der Hörtöne zweckmässigerweise mit Hilfe digitaler Tongeneratoren erfolgt, die zyklisch wiederholt als PCM-Wort codiert gespeicherte Amplitudenwerte aussenden, deren Anzahl aus Wirtschaftlichkeitsgründen eine Potenz von zwei ist. Die Frequenz der hierdurch erzeugten Töne wird durch Überspringen einer passenden Zahl von gespeicherten PCM-Worten bestimmt. Daraus ergibt sich aber, dass mit solchen Tongeneratoren keine beliebigen Frequenzen und auch nicht beliebige Subharmonische der Abtastfrequenz erzeugt werden können.

Die Aufgabe der vorliegenden Erfindung besteht daher darin, ein Verfahren anzugeben, durch das der störende Einfluss von Quantisierungsgeräuschen auf sinusförmige Hörtöne bei deren Übertragung in digitalen Vermittlungssystemen zumindest verringert wird.

Erfindungsgemäss wird diese Aufgabe dadurch gelöst, dass dem Hörton ein Oberwellenton mit gegenüber der Hörtonamplitude wesentlich geringerer Amplitude additiv überlagert wird.

Der erfindungsgemässen Lösung liegt die Erkenntnis zugrunde, dass wegen der Frequenzabhängigkeit der Abstrahlungscharakteristik der Hörkapseln der Teinehmerapparate Störanteile, die mit Frequenzen von mehr als 1 kHz auftreten, verstärkt abgestrahlt werden. Ein Oberwellenton eines Hörtons, der in diesem Frequenzbereich liegt, kann daher schon bei einem relativ geringen Pegel das Quantisierungsrauschen übertönen, wird aber selbst wegen seiner Frequenzrelation zum Hörton subjektiv nicht als Störgeräusch empfunden.

Gemäss einer besonderen Ausführungsvariante des erfindungsgemässen Verfahrens wird im Zusammenhang mit einem sinusförmigen Hörton von 425 Hz, der im Fernmeldenetz der Deutschen Bundespost als Wählton eingesetzt ist, der fünfte Oberwellenton mit 2125 Hz überlagert, der sowohl im Bereich höchster Empfindlichkeit des Gehörs als auch im Bereich hohen Wirkungsgrades der Hörkapsel liegt. Es hat sich dabei eine Relation von Hörtonamplitude zur Oberwellentonamplitude von −30 dB als günstig erwiesen.

Bei der Wahl des zu überlagernden Oberwellentons ist zu berücksichtigen, dass dieser ggf. vorhandene Tastwahlfrequenzempfänger nicht beeinflussen darf, also oberhalb des Frequenzbereichs liegen muss, in dem diese ansprechen. Bei dem vorgenannten fünften Oberwellenton des Sinustons von 425 Hz ist dies der Fall.

Wie schon dargelegt, soll das erfindungsgemässe Verfahren bevorzugt dann zur Anwendung kommen, Hörtöne mit Hilfe eines digitalen Tongenerators erzeugt werden. Der digitale Tongenerator ist dann so ausgestattet und betrieben, dass er auch die betreffenden Oberwellentöne erzeugt und dem Grundton additiv überlagert.

## Patentansprüche

1. Verfahren zur Unterdrückung von einem Hörton mit sinusförmigem Verlauf bei dessen Übertragung in einem digitalen Fernmeldevermittlungssystem überlagerten Quantisierungsgeräuschen, dadurch gekennzeichnet, dass dem Hörton ein Oberwellenton mit gegenüber der Hörtonamplitude wesentlich geringer Amplitude additiv überlagert wird.

2. Verfahren nach Anspruch 1, dadurch gekennzeichnet, dass zur Überlagerung ein Oberwellenton verwendet wird, dessen Frequenz oberhalb des Frequenzbereichs liegt, in dem Tastwahltöne übertragen werden.

3. Verfahren nach einem der vorhergehenden Ansprüche, dadurch gekennzeichnet, dass bei Übertragung eines Hörtons um 425 Hz dessen fünfter Oberwellenton um 2125 Hz mit einem gegenüber dem Hörtonpegel um ca. 30 dB geringeren Pegel überlagert wird.

4. Verfahren nach einem der vorhergehenden Ansprüche, dadurch gekennzeichnet, dass Hörton und Oberwellenton mit einem digitalen Tongenerator erzeugt und additiv überlagert werden.

## Claims

1. A process for the suppression of quantification noise superposed on a sinusoidal audible tone during transmission thereof in a digital telecommunication exchange, characterised in that a harmonic tone of a substantially lower amplitude in relation to the amplitude of the audible tone is additively superimposed on the audible tone.

2. A process as claimed in claim 1, characterised in that a harmonic tone whose frequency lies above the frequency range in which key selection tones are transmitted is used for the superimposition.

3. A process as claimed in one of the preceding claims, characterised in that during the transmission of an audible tone at 425 Hz, the fifth harmonic thereof, 2125 Hz, is superimposed at a level lower relative to the level of the audible tone by approximately 30 dB.

4. A process as claimed in one of the preceding claims, characterised in that the audible tone and the harmonic are produced by a digital tone generator and additively superimposed.

## Revendications

1. Procédé pour supprimer des bruits de quantification superposés à une tonalité audible présentant une variation sinusoïdale lors de la transmission de cette tonalité dans un système de télécommunications numériques, caractérisé par le fait qu'une tonalité harmonique possédant une amplitude nettement plus faible que l'amplitude de la tonalité audible, est superposée de façon additive à cette tonalité audible.

2. Procédé selon la revendication 1, caractérisé en ce que pour réaliser la superposition, on utilise une tonalité harmonique dont la fréquence est supérieure à la plage des fréquences, dans laquelle des tonalités de sélection au clavier sont transmises.

3. Procédé suivant l'une des revendications précédentes, caractérisé par le fait que, dans le cas d'une transmission d'une tonalité audible à 425 Hz, la cinquième tonalité harmonique à 2125 Hz est superposée à un niveau inférieur d'environ 30 dB au niveau de la tonalité audible.

4. Procédé suivant l'une des revendications précédentes, caractérisé par le fait que la tonalité audible et la tonalité harmonique sont produites au moyen d'un générateur numérique de tonalités et sont superposées de façon additive.